(19) 

Europäisches
Patentamt
European
Patent Office
Office européen
des brevets

(11) **EP 4 607 732 A1**

(12) **EUROPEAN PATENT APPLICATION**

(43) Date of publication:
**27.08.2025 Bulletin 2025/35**

(21) Application number: **25159570.8**

(22) Date of filing: **24.02.2025**

(51) International Patent Classification (IPC):
**H02J 3/00** $^{(2006.01)}$

(52) Cooperative Patent Classification (CPC):
**H02J 3/003;** H02J 2203/10; H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.02.2024 IN 202421013878**

(71) Applicant: **Tata Consultancy Services Limited
Mumbai, Maharashtra 400 021 (IN)**

(72) Inventors:
• **RAO, Anuj Kumar
411057 Pune, Maharashtra (IN)**

• **SHARMA, Deepak
411057 Pune, Maharashtra (IN)**
• **BICHPURIYA, Yogesh Kumar
411057 Pune, Maharashtra (IN)**
• **MENON, Vishnu Padmakumar
411057 Pune, Maharashtra (IN)**
• **SARANGAN, Venkatesh
600113 Chennai, Tamil Nadu (IN)**
• **VELAYUDHAN KUMAR, Mohan Raj
600113 Chennai, Tamil Nadu (IN)**
• **RAJAGOPAL, Narayanan
560066 Bangalore, Karnataka (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR OPTIMIZING DISTRIBUTED ENERGY RESOURCE HOSTING CAPACITY OF ELECTRICAL DISTRIBUTION NETWORK**

(57) Accurate estimation of distributed energy resources (DER) hosting capacity of electrical distribution network becomes pivotal to ensure reliable and stable operation of network. Existing techniques either do not capture real-life scenarios or use approximation techniques to simplify computation which leads to improper estimation of hosting capacity. Present disclosure provides method and system for determining optimal DER hosting capacity of electrical distribution network. The system first receives network configuration data, historical temporal data of DER generation, historical temporal data of load, and capacity information of each DER as input which is then utilized to compute bus and line admittance matrix for determining power flow constraints. Then, system models plurality of constraints. Thereafter, system models objective function for minimizing losses and maximizing DER utilization which is then used along with modelled constraints to create an optimization model. Finally, system solves optimization model to obtain DER hosting capacity of electrical distribution network.

receiving, by a system via one or more hardware processors, a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, a historical temporal data of distributed energy resource (DER) generation, and a historical temporal data of load, wherein the network configuration data comprises a line resistance data, a line capacitance and a line inductance data ⟍ 302

estimating, by the system via the one or more hardware processors, a bus admittance matrix and a line admittance matrix based on the network configuration data using a Kirchhoff's Current Law ⟍ 304

modelling, by the system via the one or more hardware processors, a set of constraints based on the plurality of inputs, the capacity information of each available DER, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint, a node export constraint and DER capacity constraints, and wherein the AC power flow constraints comprises an active power flow constraint and a reactive power flow constraint ⟍ 306

Ⓐ

300

**FIG. 3A**

EP 4 607 732 A1

**Description**

CROSS-REFERENCE TO RELATED APPLICATIONS AND PRIORITY

The present application claims priority from Indian patent application no. 202421013878, filed on February 26, 2024.

TECHNICAL FIELD

The disclosure herein generally relates to hosting capacity optimization, and, more particularly, to a method and a system for determining optimal distributed energy resources (DER) hosting capacity of an electrical distribution network.

BACKGROUND

Climate change and shortage of fossil fuels are continuously pushing the world towards adoption of renewable energy sources, especially Distributed Energy Resources (DERs). Almost every country in the world and the world organizations are investing in clean energy. It has become so important that even United Nations announced affordable and clean energy as one of the sustainable development goals.

However, integration of DERs in any distribution network is a challenging task as it requires proper examination of the network. It can lead to violations in technical as well as in operational limits of the network, such as voltage deviation, phase unbalance, thermal overloading, transformer overloading, power losses, power quality issues, protection devices mis-coordination etc. Hence, it becomes important to consider and calculate the size of DERs (also referred as hosting capacity) which can be added into the network for the reliable and stable operation of network.

Few of the available techniques that calculate DER hosting capacity of the network are using methods like stochastic or optimization models. However, such traditional models either do not capture the real-life scenarios or use approximation techniques to simplify the computation which can lead to improper estimation of the hosting capacity.

SUMMARY

Embodiments of the present disclosure present technological improvements as solutions to one or more of the above-mentioned technical problems recognized by the inventors in conventional systems. For example, in one aspect, there is provided a method for determining optimal distributed energy resources (DER) hosting capacity of an electrical distribution network. The method comprises receiving, by a system via one or more hardware processors, a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, a historical temporal data of distributed energy resource (DER) generation, and a historical temporal data of load, wherein the network configuration data comprises a line resistance data, a line capacitance and a line inductance data; computing, by the system via one or more hardware processors, a bus admittance matrix and a line admittance matrix based on the network configuration data using a Kirchhoff's Current Law; modelling, by the system via the one or more hardware processors, a set of constraints based on the plurality of inputs, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint and a node export constraint, and wherein the AC power flow constraints comprises an active power flow constraint and a reactive power flow constraint; modelling, by the system via the one or more hardware processors, an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints; creating, by the system via the one or more hardware processors, an optimization model based on the modelled set of constraints and the modelled objective function; and solving, by the system via the one or more hardware processors, the optimization model to obtain a DER hosting capacity of the electrical distribution network using a branch and bound technique, wherein the DER hosting capacity represents a number of DERs to be connected to the electrical distribution network for optimal operation of the electrical distribution network.

In an embodiment, wherein a size of the bus admittance matrix is calculated based on the plurality of nodes present in the electrical distribution network.

In an embodiment, wherein a size of the line admittance matrix is calculated based on the plurality of lines and the plurality of nodes present in the electrical distribution network, wherein a number of rows of the line admittance matrix depends on the plurality of lines present in the electrical distribution network, and wherein a number of columns of the line admittance matrix depends on the plurality of nodes present in the electrical distribution network.

In another aspect, there is provided a system for determining optimal distributed energy resources (DER) hosting capacity of an electrical distribution network. The system comprises a memory storing instructions; one or more communication interfaces; and one or more hardware processors coupled to the memory via the one or more communication interfaces, wherein the one or more hardware processors are configured by the instructions to: receive a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, and a historical temporal data of distributed energy resource (DER) generation, a historical temporal data of load, wherein the network configuration data comprises a line resistance data, a line capacitance and a line inductance data; compute a bus admittance matrix and a line admittance matrix based on the network configuration data using a Kirchhoff's Current Law; model a set of constraints based on the plurality of inputs, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint and a node export constraint, and wherein the AC power flow constraints comprises an active power flow constraint and a reactive power flow constraint; model an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints; create an optimization model based on the modelled set of constraints and the modelled objective function; and solve the optimization model to obtain a DER hosting capacity of the electrical distribution network using a branch and bound technique, wherein the DER hosting capacity represents a number of DERs to be connected to the electrical distribution network for optimal operation of the electrical distribution network.

In yet another aspect, there are provided one or more non-transitory machine-readable information storage mediums comprising one or more instructions which when executed by one or more hardware processors determine optimal distributed energy resources hosting capacity of an electrical distribution network by receiving, by a system via one or more hardware processors, a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, a historical temporal data of distributed energy resource (DER) generation, and a historical temporal data of load, wherein the network configuration data comprises a line resistance data, a line capacitance and a line inductance data; computing, by the system via one or more hardware processors, a bus admittance matrix and a line admittance matrix based on the network configuration data using a Kirchhoff's Current Law; modelling, by the system via the one or more hardware processors, a set of constraints based on the plurality of inputs, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint and a node export constraint, and wherein the AC power flow constraints comprises an active power flow constraint and a reactive power flow constraint; modelling, by the system via the one or more hardware processors, an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints; creating, by the system via the one or more hardware processors, an optimization model based on the modelled set of constraints and the modelled objective function; and solving, by the system via the one or more hardware processors, the optimization model to obtain a DER hosting capacity of the electrical distribution network using a branch and bound technique, wherein the DER hosting capacity represents a number of DERs to be connected to the electrical distribution network for optimal operation of the electrical distribution network.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.
FIG. 2 illustrates an exemplary block diagram of a system for determining optimal distributed energy resources (DER) hosting capacity of an electrical distribution network, in accordance with an embodiment of the present disclosure. FIGS. 3A and 3B, collectively, illustrate an exemplary flow diagram of a method for determining optimal DER hosting capacity of an electrical distribution network, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As discussed earlier, nowadays Distributed energy resources (DERs) are being considered as a promising mean to achieve sustainability goals as, DERs, upon being placed at the distribution side, can really help in reducing carbon-based electricity as well as network losses. However, integration of DERs to the network create challenges of optimal network planning and coordinated operation as excess DERs connection may lead to certain problems, such as overvoltage, overloading, protection devices mis-coordination etc. Hence, it becomes important to evaluate the hosting capacity of the network which states the maximum number of DERs that can be accommodated in an already existing network without breaching its technical and operational constraints.

Several methods that are available for hosting capacity assessment fall into four major categories. The first method category is deterministic methods that generally give solutions for worst case scenarios and are normally used in sensitivity studies. The second method category is Stochastic methods that generate random scenarios using various techniques, such as Monte Carlo simulation, sparse grid technique and Quasi Monte Carlo to get a solution. The third method category is Optimization based methods which are considered as one of the best approaches to get optimal solutions. The fourth method category is streamlined methods.

However, the available assessment techniques that are based on the defined assessment methods either do not capture the real life scenarios where capacity options of DERs that are considered are not as per the DER capacities that are available in the market or use approximation techniques to simplify the computation which generally lead to improper estimation of the hosting capacity.

So, a technique that can consider available capacity options of DERs while determining hosting capacity of electrical distribution network while reducing the computational complexity is still to be explored.

Embodiments of the present disclosure overcome the above-mentioned disadvantages by providing a method and a system for determining optimal distributed energy resources (DER) hosting capacity of an electrical distribution network. The system of the present disclosure first receives a network configuration data, a historical temporal data of distributed energy resource (DER) generation, a historical temporal data of load, and a capacity information of each DER as input which is then utilized to computes bus and line admittance matrix for determining power flow constraints using Kirchhoff's Current Law. Then, the system models a plurality of constraints. Thereafter, the system models an objective function for minimizing losses and maximizing DER utilization which is then used long with the modelled constraints to create an optimization model. Finally, the system solves the optimization model using a branch and bound technique to obtain a DER hosting capacity of the electrical distribution network.

In the present disclosure, the system and the method consider losses in the network as well as capacity constraints of DER, thus ensuring accurate computation of the hosting capacity which further ensures stable and reliable operation of the distribution network in presence of DERs. The system and the method consider temporal correlation between demand and generation to calculate hosting capacity of the distribution network, thereby making the system more usable for real-time applications. Additionally, the system provides locational flexibility to the consumers as DERs can be connected anywhere in the distribution network.

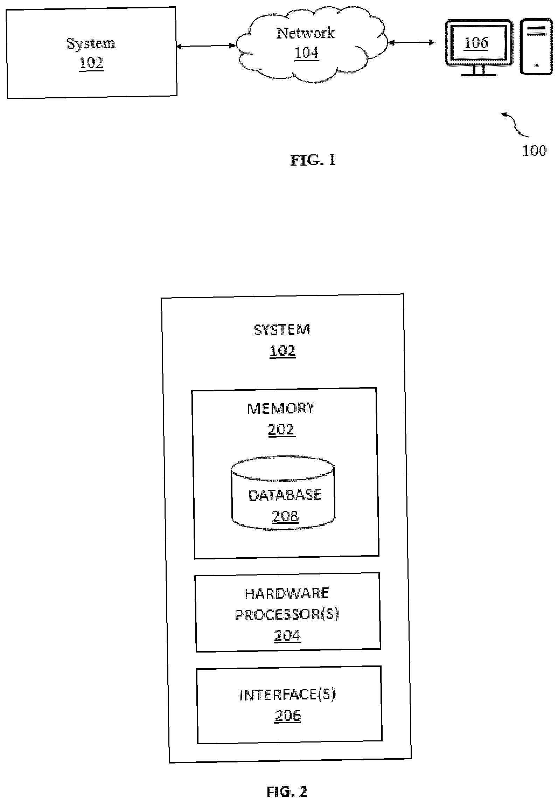

Referring now to the drawings, and more particularly to FIGS. 1 through 3A-3B, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, estimating bus voltages, computing a bus admittance matrix and a line admittance matrix, modelling a set of constraints, etc. The environment 100 generally includes a system 102, an electronic device 106 (hereinafter also referred as a user device 106), each coupled to, and in communication with (and/or with access to) a network 104. It should be noted that one user device is shown for the sake of explanation, and there can be more number of user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a user (e.g., a distribution network operator/control center operator) who is responsible for managing electricity distribution network. Examples of the user device 106 include, but are not limited to, a personal computer (PC), a mobile phone, a tablet device, a Personal Digital Assistant (PDA), a server, a voice activated assistant, a smartphone, and a laptop.

The system 102 includes one or more hardware processors and a memory. The system 102 is first configured to receive a plurality of inputs associated with an electrical distribution network and a capacity information of each available DER via the network 104 from the user device 106. The plurality of inputs includes one or more of a network configuration data, a historical temporal data of distributed energy resource generation, and a historical temporal data of load.

Then, the system 102 estimates a bus admittance matrix and a line admittance matrix based on the plurality of inputs using a Kirchhoff's Current Law. Thereafter, the system 102 uses the bus admittance and line admittance matrix along with the plurality of inputs and the capacity information to model a set of constraints. Further, an objective function is modelled with objective of minimization of grid import, a power curtailment and line losses, and maximization of the DER utilization as a Mixed Integer Nonlinear Programming (MINLP) problem which is then solved using a branch and bound technique to obtain a DER hosting capacity of the electrical distribution network.

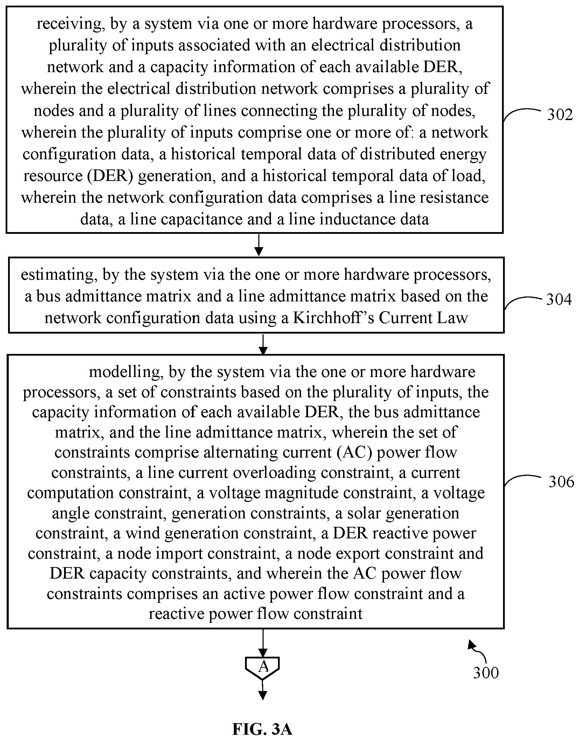

The process of obtaining the DER hosting capacity for the electrical distribution network is explained in detail with reference to FIGS. 3A-3B.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the system 102 for determining optimal DER hosting capacity of an electrical distribution network, in accordance with an embodiment of the present disclosure. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, a Kirchhoff's Current Law, a branch and bound technique, a modelled set of constraints, a Mixed Integer Nonlinear Programming (MINLP), one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

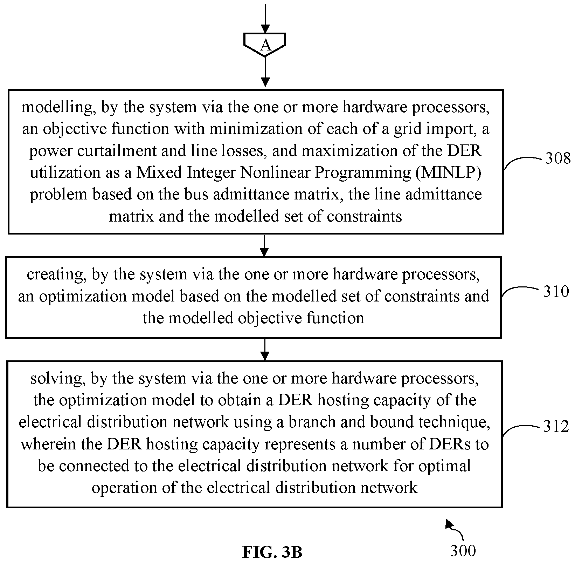

FIGS. 3A and 3B, collectively, with reference to FIGS. 1 to 2, represent an exemplary flow diagram of a method 300 for determining optimal DER hosting capacity of an electrical distribution network, in accordance with an embodiment of the present disclosure. The method 300 may use the system 102 of FIGS. 1 and 2 for execution. In an embodiment, the system 102 comprises one or more data storage devices or the memory 202 operatively coupled to the one or more hardware processors 204 and is configured to store instructions for execution of steps of the method 300 by the one or more hardware processors 204. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 302 of the present disclosure, the one or more hardware processors 204 of the system 102 receive a plurality of inputs associated with an electrical distribution network and a capacity information of each available DER. In particular, the capacity options that are available in the general market for the DERs, such as solar photovoltaic panels and the wind turbines are provided as input along with the inputs associated with an electrical distribution network.

In an embodiment, the electrical distribution network comprises a plurality of nodes $\mathcal{N}$ and a plurality of lines $\mathcal{L}$ connecting the plurality of nodes $\mathcal{N}$. The plurality of inputs includes one or more of a network configuration data, a historical temporal data of distributed energy resource (DER) generation, and a historical temporal data of load. The network configuration data includes a line resistance data, a line capacitance and a line inductance data. In at least one example embodiment, the historical temporal data of the DER generation represents the historical DER generation data of a particular time period of a particular day. Similarly, the historical temporal data of the load represents the historical load requirement of the same time period of the same day as of the historical DER generation.

At step 304 of the present disclosure, the one or more hardware processors 204 of the system 102 estimates a bus admittance matrix $Yn$ (also referred to as node admittance matrix) and a line admittance matrix $Yl$ based on the network configuration data using Kirchhoff's Current Law. The bus admittance matrix represents an admittance at each node of the electrical distribution network. Similarly, the line admittance matrix shows admittance at each line connecting nodes of the electrical distribution network.

In an embodiment, for estimating the bus admittance matrix, the system 102 first calculates a size of the bus admittance matrix. And the size of the bus admittance matrix depends on the plurality of nodes $\mathcal{N}$ present in the electrical distribution network. In an example embodiment, assume there are '3' nodes present in the electrical distribution network, Then, the size of the bus admittance matrix can be '3*3'. Once the size of the bus admittance matrix is available, the system 102 estimates the bus admittance matrix.

In one embodiment, for estimating the bus admittance matrix, the system 102, for each node of the plurality of nodes $\mathcal{N}$ present in the electrical distribution network, first calculates a shunt admittance by calculating an admittance of one or more shunt elements connected to a node of the electrical distribution network. The admittance is nothing but a reciprocal of an impedance, which is a combination of the line resistance and a line reactance of the electrical distribution network. In at least one example embodiment, the line reactance is calculated based on the line inductance and the line capacitance information received as the network configuration data. Then, the system 102 calculates a line admittance by calculating the admittance of one or more lines connected to the node. Thereafter, the system 102 calculates a total admittance by calculating a sum of the shunt admittance and the line admittance. Further, the system 102 places the calculated total admittance on a diagonal element of the bus admittance matrix and places a negative of the line admittance on an off-diagonal element of the bus admittance matrix.

A single element of the bus admittance matrix $Yn$ can be represented as $Yn_{jk}\angle\theta n_{jk}$. And $\mathcal{N}_j$ is a set of nodes that are connected to a node $j$. An example representation of a 3*3 bus admittance matrix is shown below.

$$\begin{bmatrix} Y_{sh1} + \dfrac{1}{R_{12} + jX_{12}} & \dfrac{-1}{R_{12} + jX_{12}} & 0 \\[2em] \dfrac{-1}{R_{12} + jX_{12}} & Y_{sh2} + \dfrac{1}{R_{12} + jX_{12}} + \dfrac{1}{R_{23} + jX_{23}} & \dfrac{-1}{R_{23} + jX_{23}} \\[2em] 0 & \dfrac{-1}{R_{23} + jX_{23}} & Y_{sh3} + \dfrac{1}{R_{23} + jX_{23}} \end{bmatrix}$$

In an embodiment, for estimating the line admittance matrix, the system 102 first calculates a size of the line admittance matrix. And the size of the line admittance matrix depends on the plurality of lines $\mathcal{L}$ and the plurality of nodes $\mathcal{N}$ present in the electrical distribution network. In particular, a number of rows of the line admittance matrix depends on the plurality of lines present in the electrical distribution network, and a number of columns of the line admittance matrix depends on the plurality of nodes present in the electrical distribution network. So, size of the line admittance matrix can be represented as $\mathcal{L} * \mathcal{N}$.

In an example embodiment, assume there are '2' lines and '3' nodes are present in the electrical distribution network. Then, the size of the line admittance matrix can be '2*3'. In general, each row of the line admittance matrix represents a line connecting nodes of the electrical distribution network and each column of the line admittance matrix represents a node of the electrical distribution network. Once the size of the line admittance matrix is available, the system 102 estimates the line admittance matrix.

In one embodiment, for estimating the line admittance matrix $Yl$, the system 102, for each row of one or more rows present in the electrical distribution network, first calculates a sum of the line admittance and the line capacitance of a line of the electrical distribution network. Then, the system 102 calculates a negative of the line admittance. Thereafter, the system 102 places the calculated sum on a start node of the line and the calculated negative on an end node of the line. Further, the system 102 places zero on other columns of the row.

A single element of the line admittance matrix $Yl$ can be represented as $Yl_{jk}\angle\theta l_{jk}$. An example representation of a 2*3 line admittance matrix is shown below.

$$\begin{bmatrix} \dfrac{jB_{12}}{2} + \dfrac{1}{R_{12}+jX_{12}} & \dfrac{-1}{R_{12}+jX_{12}} & 0 \\[2em] 0 & \dfrac{jB_{23}}{2} + \dfrac{1}{R_{23}+jX_{23}} & \dfrac{-1}{R_{23}+jX_{23}} \end{bmatrix}$$

At step 306 of the present disclosure, the one or more hardware processors 204 of the system 102 model a set of constraints based on the plurality of inputs, the capacity information of each available DER, the bus admittance matrix, and the line admittance matrix.

In an embodiment, the set of constraints comprise an alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint, a node export constraint and a DER capacity constraint. In at least one example embodiment, the AC power flow constraints comprises an active power flow constraint and a reactive power flow constraint. In an embodiment, $P_{c,n}^{s}$ represents capacity of solar PV panels available in the general market. Similarly, $P_{c,n}^{w}$ represents capacity of wind turbines available in the general market.

In an embodiment, the AC power flow constraints are modelled based on the bus admittance matrix and the line admittance matrix. The AC power flow constraints ensure that AC power flow equations are true at any operating instant in a power system. The AC power flow constraints are formulated by assuming that there is power supply coming from an external grid connected at a slack bus which will be used when the solar generation is not sufficient to fulfil the power demands of an electrical distribution system.

The AC power flow constraints comprises an active power flow constraint and a reactive power flow constraint. The active power flow constraint is represented as:

$$p_{j,t}^{g} + p_{j,t}^{grid} - P_{j,t}^{d} = \sum_{k \in \mathcal{N}} v_{j,t}\, v_{k,t}\, Yn_{jk} \cos\left(\delta_{j,t} - \delta_{k,t} - \theta n_{jk}\right)$$

$$\forall j \in \mathcal{N}, \forall t \in \mathcal{T} \qquad \qquad \dots \text{ equation (1)},$$

Where, $p_{j,t}^{g}$ represents active power generation at node $j$ for time $t$,

$p_{j,t}^{grid}$ represents grid injected active power at node for time $t$,

$P_{j,t}^{d}$ represents active power demand at node $j$ at time $t$,
$v_{j,t}$ represents voltage magnitude of node $j$ at time $t$,
$v_{k,t}$ represents voltage magnitude of node $k$ at time $t$,
$Yn_{jk}$ represents magnitude of one element of node admittance matrix,
$\delta_{j,t}$ represents voltage angle of node $j$ at time $t$,
$\delta_{k,t}$ represents voltage angle of node $k$ at time $t$, and
$\theta n_{jk}$ represents angle of one element of node admittance matrix.

The reactive power flow constraints is represented as:

$$q_{j,t}^{g} + q_{j,t}^{grid} - Q_{j,t}^{d} = \sum_{k \in \mathcal{N}} v_{j,t}\, v_{k,t}\, Yn_{jk} \sin\left(\delta_{j,t} - \delta_{k,t} - \theta n_{jk}\right)$$

$$\forall j \in \mathcal{N}, \forall t \in \mathcal{T} \qquad \qquad \dots \text{equation (2)},$$

Where, $q_{j,t}^{g}$ represents reactive power generation at node $j$ for time $t$,

$q_{j,t}^{grid}$ represents grid injected reactive power at node $j$ for time $t$,

$Q_{j,t}^{d}$ represents reactive power demand at node $j$ for time $t$, and

$\theta n_{jk}$ represents angle of one element of node admittance matrix.

In an embodiment, the line current overloading constraint is modelled to ensure that the current in each line present in the electrical distribution network is not exceeding its dedicated/maximum limit. The line current overloading constraint is represented as:

$$i_{l,t} = \sum_{k \in \mathcal{N}_j} Yl_{jk} v_{k,t} \quad \forall jk \in \mathcal{L}, \forall t \in \mathcal{T} \qquad \qquad \dots \text{equation (3)},$$

Where, $i_{l,t}$ represents the current flowing through the line connecting node $j$ and $k$ at time $t$, and $Yl_{jk}$ represents magnitude of one element of line admittance matrix.
In an embodiment, the current computation constraint is modelled to ensure that the current responsible for losses in the electrical distribution network are also considered for accurate determination. The current computation constraint can be represented as:

$$\left| i_{l,t} \right| \leq I_{jk}^{max} \quad \forall jk \in \mathcal{L}, \forall t \in \mathcal{T} \qquad \qquad \dots \text{ equation (4)}$$

Where, $I_{jk}^{max}$ represents maximum current flowing in a line connecting node $j$ and $k$.
In an embodiment, the generation constraints are modelled to ensure limit on generation at nodes not available for DER installation. The current computation constraint can be represented as:

$$P_j^{min} \leq p_{j,t}^g \leq P_j^{max} \quad \forall j \in \mathcal{N}, \forall t \in \mathcal{T} \qquad \text{....equation (5),}$$

Where, $P_j^{min}$ represents, minimum active power generation at node j

$p_{j,t}^g$ represents, active power generation at node $j$ for time $t$

$P_j^{max}$ represents, maximum active power generation at node $j$

$$Q_j^{min} \leq q_{j,t}^g \leq Q_j^{max} \quad \forall j \in \mathcal{N}, \forall t \in \mathcal{T} \qquad \text{...equation (6),}$$

Where, $Q_j^{min}$ represents, minimum reactive power generation at node $j$

$q_{j,t}^g$ represents, reactive power generation at node $j$ for time $t$

$Q_j^{max}$ represents maximum reactive power generation at node $j$

The voltage magnitude constraint and voltage angle constraint are modelled to ensure voltage and angle limits, respectively. The voltage magnitude constraint can be represented as:

$$V_j^{min} \leq v_{j,t} \leq V_j^{max} \quad \forall j \in \mathcal{N}, \forall t \in \mathcal{T} \qquad \text{...equation (7),}$$

$V_j^{min}$ represents minimum voltage magnitude at node $j$, and

$V_j^{max}$ represents maximum voltage magnitude at node $j$

The voltage angle constraint can be represented as:

$$\theta_j^{min} \leq \theta_{j,t} \leq \theta_j^{max} \quad \forall j \in \mathcal{N}, \forall t \in \mathcal{T} \qquad \text{...equation (8)}$$

$\theta_j^{min}$ represents minimum voltage angle at node $j$, and

$\theta_j^{max}$ represents maximum voltage angle at node $j$

In an embodiment, the fix nominal voltage and fix power angle at slack bus i.e., Bus 1 can be represented as:

$$v_{1,t} = V^{nominal} \quad \forall t \in \mathcal{T} \qquad \text{...equation (9)}$$

and

$$\delta_{1,t} = 0 \qquad \forall t \in \mathcal{T} \qquad \text{...equation (10)}$$

In an embodiment, a total DER generation constraint is a combination of the solar generation constraint and the wind generation constraint. The total DER generation constraint can be represented as:

$$p_{j,t}^g = \sum_{c \in C} P_{c,j}^s x_{c,j}^s Y_{j,t}^s + \sum_{c \in C} P_{c,j}^w x_{c,j}^w Y_{j,t}^w - p_{j,t}^{curt} \quad \forall j \in \mathcal{M}, \forall t \in \mathcal{T} \quad \text{...equation (11)}$$

So, a first term on a right hand side of equation (11) i.e., multiplication of a solar capacity $P_{c,j}^s x_{c,j}^s$ with a solar generation curve $Y_{j,t}^s$ provide us the real limits of solar power generation i.e., the solar generation constraint. In particular, the actual variation of solar generation over the entire day is considered while forming the solar generation constraint.

Similarly, a second term in equation (11) provides a total wind generation for selected capacity of wind turbines. A term power curtailment $p_{j,t}^{curt}$ in equation (11) represents uncertainty in generation of wind (also referred as wind generation constraints) due to reasons, such as shading, clouds etc.

In an embodiment, the DER reactive power constraint is modelled to limit the reactive power of DERs at the one or more nodes on which they are installed. The DER reactive power constraint can be represented as:

$$-\left(p_{j,t}^g \tan(\cos^{-1}(\varphi^{PV})) + p_{j,t}^g \tan(\cos^{-1}(\varphi^{wt}))\right) \leq q_{j,t}^g \leq$$

$$\left(p_{j,t}^g \tan(\cos^{-1}(\varphi^{PV})) + p_{j,t}^g \tan(\cos^{-1}(\varphi^{wt}))\right) \quad \forall j \in \mathcal{M}, \forall t \in \mathcal{T}$$

$$\ldots \text{equation (12)}$$

In an embodiment, the node import constraint and the node export constraint are modelled to limit the nodal import and export, respectively. The node import constraint can be represented as:

$$\left|p_{j,t}^g\right| \leq P_j^{max} \quad \forall j \in \mathcal{M}, \forall t \in \mathcal{T} \qquad \ldots \text{equation (13)}$$

The node export constraint can be represented as:

$$\left|q_{j,t}^g\right| \leq Q_j^{max} \quad \forall j \in \mathcal{M}, \forall t \in \mathcal{T} \qquad \ldots \text{equation (14)}$$

The DER capacity constraints are modelled to ensure that only one or no capacity of solar and wind each can be selected for installation at a node of the electrical distribution network. The DER capacity constraints can be represented as:

$$\sum_{c \in C} x_{c,j}^s \leq 1 \quad \forall j \in \mathcal{M} \qquad \ldots \text{equation (15)}$$

$$\sum_{c \in C} x_{c,j}^w \leq 1 \quad \forall j \in \mathcal{M} \qquad \ldots \text{equation (16)},$$

Where, $x_{c,j}^s$ and $x_{c,j}^w$ are binary variables of capacity $c$ at node $j$ for solar and wind respectively.

In particular, there are four cases that can be possible on a node i.e. (a) no solar and wind, (b) one solar, no wind, (c) no solar, one wind, and (d) one solar, one wind.

At step 308 of the present disclosure, the one or more hardware processors 204 of the system 102 model an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints. In particular, the objective function has the objective of maximization of the DER utilization i.e. solar penetration and wind utilization without violating limits of the network system.

In an embodiment, the objective function can be modelled as:

$$max \sum_{c \in C} \sum_{n \in \mathcal{M}} P^s_{c,n} x^s_{c,n} + \sum_{c \in C} \sum_{n \in \mathcal{M}} P^w_{c,n} x^w_{c,n} - K_1 \sum_{j \in \mathcal{N}} \sum_{t \in \mathcal{T}} p^{grid}_{j,t}$$

$$- K_2 \sum_{j \in \mathcal{N}} \sum_{t \in \mathcal{T}} q^{grid}_{j,t} - K_3 \sum_{j \in M} \sum_{t \in \mathcal{T}} p^{curt.}_{j,t}$$

$$- K_4 \sum_{l \in \mathcal{L}} \sum_{t \in \mathcal{T}} i^2_{l,t} r_l$$

Where, $P^s_{c,n}$ and $P^w_{c,n}$ represents the capacities of solar PV panel and wind turbine respectively available at node $n$,

$x^s_{c,n}$ and $x^w_{c,n}$ represents the binary variables which decides which capacity solar, and wind respectively should be installed at which nodal location,

$K_1$, $K_2$, $K_3$, $K_4$ represents the weighted constants, and

$p^{grid}_{j,t}$, and $q^{grid}_{j,t}$ represents the grid injected active and the grid injected reactive powers to support the electrical distribution system when there is less solar and wind power generation.

As we can see, the objective function is non-linear with binary variables and the constraints set with AC model is also non-linear, making the formulation to be the MINLP problem.

At step 310 of the present disclosure, the one or more hardware processors 204 of the system 102 create an optimization model based on the modelled set of constraints and the modelled objective function.

At step 312 of the present disclosure, the one or more hardware processors 204 of the system 102 solve the optimization model to obtain a DER hosting capacity of the electrical distribution network using a branch and bound technique. In particular, the MINLP problem is solved using the branch and bound technique to obtain the DER hosting capacity of the electrical distribution network.

In an embodiment, the DER hosting capacity represents a number of DERs to be connected to the electrical distribution network for optimal operation of the electrical distribution network. In particular, the DER hosting capacity represents a maximum amount of DERs that can be accommodated in an already existing network without breaching its technical and operational constraints.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, existing techniques either do not capture the real-life scenarios or use approximation techniques to simplify the computation which leads to improper estimation of the hosting capacity. So, to overcome the disadvantages, embodiments of the present disclosure provide a method and a system for determining optimal DER hosting capacity of an electrical distribution network. More specifically, the system and the method consider losses in the network as well as capacity constraints of the DER, thus ensuring accurate computation of the hosting capacity which further ensures stable and reliable operation of the distribution network in presence of the DERs. Further, the system and the method consider temporal correlation between demand and generation to calculate hosting capacity of the distribution network, thereby making the system more usable for real-time applications. Additionally, the system provides locational flexibility to the consumers as DERs can be connected anywhere in the distribution network

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:

   receiving (302), by a system via one or more hardware processors, a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, a historical temporal data of distributed energy resource (DER) generation, and a historical temporal data of load, wherein the network configuration data comprises a line resistance data, a line capacitance and a line inductance data;
   estimating (304), by the system via the one or more hardware processors, a bus admittance matrix and a line admittance matrix based on the network configuration data using a Kirchhoff's Current Law;
   modelling (306), by the system via the one or more hardware processors, a set of constraints based on the plurality of inputs, the capacity information of each available DER, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint, a node export constraint and DER capacity constraints, and wherein the AC power flow constraints comprises an active power flow constraint and a reactive power flow constraint;
   modelling (308), by the system via the one or more hardware processors, an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints;
   creating (310), by the system via the one or more hardware processors, an optimization model based on the modelled set of constraints and the modelled objective function; and

solving (312), by the system via the one or more hardware processors, the optimization model to obtain a DER hosting capacity of the electrical distribution network using a branch and bound technique, wherein the DER hosting capacity represents a number of DERs to be connected to the electrical distribution network for optimal operation of the electrical distribution network.

2. The processor implemented method (300) as claimed in claim 1, wherein a size of the bus admittance matrix is calculated based on the plurality of nodes present in the electrical distribution network.

3. The processor implemented method (300) as claimed in claim 1, wherein a size of the line admittance matrix is calculated based on the plurality of lines and the plurality of nodes present in the electrical distribution network, wherein a number of rows of the line admittance matrix depends on the plurality of lines present in the electrical distribution network, and wherein a number of columns of the line admittance matrix depends on the plurality of nodes present in the electrical distribution network.

4. A system (102), comprising:

a memory (202) storing instructions;
one or more communication interfaces (206); and
one or more hardware processors (204) coupled to the memory (202) via the one or more communication interfaces (206), wherein the one or more hardware processors (204) are configured by the instructions to:

receive a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, a historical temporal data of distributed energy resource (DER) generation, and a historical temporal data of load, wherein the network configuration data comprises a line resistance data, a line capacitance and a line inductance data;
estimate a bus admittance matrix and a line admittance matrix based on the network configuration data using a Kirchhoff's Current Law;
model a set of constraints based on the plurality of inputs, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint, a node export constraint and DER capacity constraints, and wherein the AC power flow constraints comprises an active power flow constraint and a reactive power flow constraint;
model an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints;
create an optimization model based on the modelled set of constraints and the modelled objective function; and
solve the optimization model to obtain a DER hosting capacity of the electrical distribution network using a branch and bound technique, wherein the DER hosting capacity represents a number of DERs to be connected to the electrical distribution network for optimal operation of the electrical distribution network.

5. The system as claimed in claim 4, wherein a size of the bus admittance matrix is calculated based on the plurality of nodes present in the electrical distribution network.

6. The system as claimed in claim 4, wherein a size of the line admittance matrix is calculated based on the plurality of lines and the plurality of nodes present in the electrical distribution network, wherein a number of rows of the line admittance matrix depends on the plurality of lines present in the electrical distribution network, and wherein a number of columns of the line admittance matrix depends on the plurality of nodes present in the electrical distribution network.

7. One or more non-transitory machine-readable information storage mediums comprising one or more instructions which when executed by one or more hardware processors cause:

receiving, a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, a historical temporal data of distributed energy resource (DER) generation, and a historical temporal data of load, wherein the network configuration data comprises a line resistance data, a line capacitance and a line inductance data;

estimating, a bus admittance matrix and a line admittance matrix based on the network configuration data using a Kirchhoff's Current Law;

modelling the capacity information of each available DER, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint, a node export constraint and DER capacity constraints, and wherein the AC power flow constraints comprises an active power flow constraint and a reactive power flow constraint;

modelling, an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints;

creating, an optimization model based on the modelled set of constraints and the modelled objective function; and

solving, the optimization model to obtain a DER hosting capacity of the electrical distribution network using a branch and bound technique, wherein the DER hosting capacity represents a number of DERs to be connected to the electrical distribution network for optimal operation of the electrical distribution network.

8. The one or more non-transitory machine-readable information storage mediums as claimed in claim 7, wherein a size of the bus admittance matrix is calculated based on the plurality of nodes present in the electrical distribution network.

9. The one or more non-transitory machine-readable information storage mediums as claimed in claim 7, wherein a size of the line admittance matrix is calculated based on the plurality of lines and the plurality of nodes present in the electrical distribution network, wherein a number of rows of the line admittance matrix depends on the plurality of lines present in the electrical distribution network, and wherein a number of columns of the line admittance matrix depends on the plurality of nodes present in the electrical distribution network.

**FIG. 1**

**FIG. 2**

receiving, by a system via one or more hardware processors, a plurality of inputs associated with an electrical distribution network and a capacity information of each available DER, wherein the electrical distribution network comprises a plurality of nodes and a plurality of lines connecting the plurality of nodes, wherein the plurality of inputs comprise one or more of: a network configuration data, a historical temporal data of distributed energy resource (DER) generation, and a historical temporal data of load, wherein the network configuration data comprises a line resistance data, a line capacitance and a line inductance data — 302

estimating, by the system via the one or more hardware processors, a bus admittance matrix and a line admittance matrix based on the network configuration data using a Kirchhoff's Current Law — 304

modelling, by the system via the one or more hardware processors, a set of constraints based on the plurality of inputs, the capacity information of each available DER, the bus admittance matrix, and the line admittance matrix, wherein the set of constraints comprise alternating current (AC) power flow constraints, a line current overloading constraint, a current computation constraint, a voltage magnitude constraint, a voltage angle constraint, generation constraints, a solar generation constraint, a wind generation constraint, a DER reactive power constraint, a node import constraint, a node export constraint and DER capacity constraints, and wherein the AC power flow constraints comprises an active power flow constraint and a reactive power flow constraint — 306

A

300

**FIG. 3A**

modelling, by the system via the one or more hardware processors, an objective function with minimization of each of a grid import, a power curtailment and line losses, and maximization of the DER utilization as a Mixed Integer Nonlinear Programming (MINLP) problem based on the bus admittance matrix, the line admittance matrix and the modelled set of constraints ⟶ 308

creating, by the system via the one or more hardware processors, an optimization model based on the modelled set of constraints and the modelled objective function ⟶ 310

solving, by the system via the one or more hardware processors, the optimization model to obtain a DER hosting capacity of the electrical distribution network using a branch and bound technique, wherein the DER hosting capacity represents a number of DERs to be connected to the electrical distribution network for optimal operation of the electrical distribution network ⟶ 312

**FIG. 3B**    300

Europäisches
Patentamt

European
Patent Office

Office européen
des brevets

## EUROPEAN SEARCH REPORT

**Application Number**

EP 25 15 9570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MANSHADI SAEED D ET AL: "Expansion of Autonomous Microgrids in Active Distribution Networks", IEEE TRANSACTIONS ON SMART GRID, IEEE, USA, vol. 9, no. 3, 1 May 2018 (2018-05-01), pages 1878-1888, XP011681229, ISSN: 1949-3053, DOI: 10.1109/TSG.2016.2601448 [retrieved on 2018-04-18] * page 1878 * * page 1882 - page 1885 * | 1-9 | INV. H02J3/00 |
| X | CN 107 332 232 B (UNIV TSINGHUA; STATE GRID JIANGSU ELECTRIC POWER CO RES INST) 22 November 2019 (2019-11-22) * paragraphs [0010] - [0218] * | 1,4,7 | |
| X | US 11 374 409 B2 (SAVANT TECH LLC [US]) 28 June 2022 (2022-06-28) * column 6, line 42 - column 12, line 58 * | 1,4,7 | |
| | | | TECHNICAL FIELDS SEARCHED (IPC) |
| X | CN 115 276 113 A (STATE GRID JIANGSU ELECTRIC POWER CO LTD) 1 November 2022 (2022-11-01) * paragraphs [0004] - [0138] * | 1,4,7 | H02J |

The present search report has been drawn up for all claims

| Place of search | Date of completion of the search | Examiner |
|---|---|---|
| Munich | 17 June 2025 | Bergler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9570

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | | Publication date | Patent family member(s) | Publication date |
|---|---|---|---|---|
| CN 107332232 | B | 22-11-2019 | NONE | |
| US 11374409 | B2 | 28-06-2022 | NONE | |
| CN 115276113 | A | 01-11-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421013878